# EUROPEAN PATENT SPECIFICATION

(11) **EP 3 510 055 B1**
(45) Date of publication and mention of the grant of the patent: **19.08.2020**
(21) Application number: 17737830.4
(22) Date of filing: 13.07.2017
(51) Int. Cl.: C08F 2/01, C08F 2/12, C08F 2/18, C08F 10/02

(54) **MANAGEMENT OF POLYMER FINES IN MULTIMODAL POLYETHYLENE PRODUCTION**
VERWALTUNG VON POLYMERFEINTEILCHEN IN DER MULTIMODALEN POLYETHYLENHERSTELLUNG
GESTION DES FINES DE POLYMÈRES DANS LA PRODUCTION DE POLYÉTHYLÈNE MULTIMODAL

(30) Priority: 07.09.2016 EP 16187610
(43) Date of publication of application: 17.07.2019
(73) Proprietor: SABIC Global Technologies B.V., 4612 PX Bergen op Zoom (NL)
(72) Inventor: VISSCHER, Frans, 6160 GA Geleen (NL); GUZMAN-CARRAZCO, Job, Daniel, 6160 GA Geleen (NL); WOLLERMANN, Gerd, 6160 GA Geleen (NL)
(74) Representative: Sabic Intellectual Property Group
(86) International application number: PCT/EP2017/067680
(87) International publication number: WO 2018/046169

(56) References cited:
- US-A1- 2014 171 603

## Description

### FIELD OF THE INVENTION

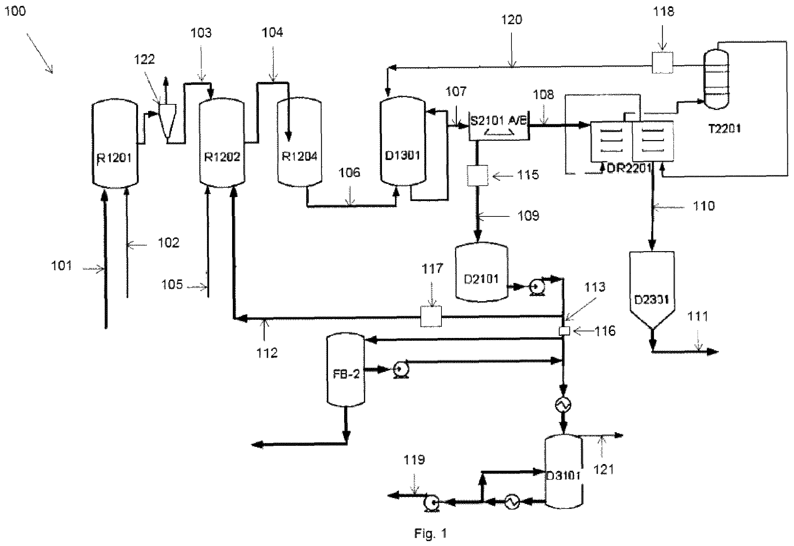

The present invention relates to a process for the manufacturing of multimodal high density polyethylene (HDPE). Also described is a system for reducing the presence of polymer fines in a process for the manufacturing of multimodal HDPE as depicted in Fig. 1.

### BACKGROUND

High density polyethylene (HDPE) can be produced in a two stage reactor system, where the first polymerization stage is performed in a first reactor by mixing catalyst, co-catalyst, diluent, ethylene and optionally (co-)monomer and hydrogen. With the catalyst and co-catalyst, which are normally of the Ziegler-Natta type, polymerization is performed to obtain HDPE particles having a molecular weight distribution with a relatively low weight median. The first polymerization step is performed in a slurry which is cooled and recycled back into the first reactor.

In a second polymerization stage, the slurry from the first reactor can be fed into a second reactor, wherein the relative low median weight HDPE particles from the first stage can be grown by further polymerization according to a molecular weight distribution having a higher weight median. The further polymerization can be performed by feeding and mixing diluent, ethylene and optionally co-monomer and hydrogen to the first slurry from the first stage. The resulting HDPE particles in the second reactor slurry thus obtains a molecular weight distribution having two peaks corresponding to the first median and the second median of the respective stages in the polymerization. Thus the obtained HDPE having a two peaked molecular weight distribution is called bimodal HDPE.

Production processes for bimodal high density polyethylene (HDPE) are further summarized at pages 16-20 of "PE 100 Pipe systems" (edited by Bromstrup; second edition, ISBN 3-8027-2728-2). The production of bimodal high density polyethylene (HDPE) via a low pressure slurry process is described by Alt et al. in "Bimodal polyethylene-Interplay of catalyst and process" (Macromol.Symp. 2001 , 163, 135-143).

In a third stage, post processing can be performed in a third reactor, wherein an even higher monomer conversion rate in the slurry can be obtained. The post processing reactor is optional and can alternatively be kept in a stand-by mode.

In this reactor the final polymerization takes place, resulting in a conversion rate of more than 95% of the monomers used. The suspension then flows to a suspension receiver and the suspension leaving the receiver is separated in a decanter centrifuge. The separation in the decanter centrifuge generates two streams: a stream that is essentially liquid, with a small amount of solid polymer fines, and a stream that is essentially a wet solid, with residual amounts of liquid diluent.

The solid polymer stream is fed to a fluidized bed dryer.

As described in WO2010136202, in the dryer-section remaining diluent is stripped off and then recovered in a closed loop nitrogen system. The dried polymer product is HDPE powder can be pneumatically conveyed by nitrogen to the extrusion section where it can be processed into HDPE pellets.

The liquid stream is further subdivided so that part of the stream can be sent back to the second reactor, as is, and part of the liquid stream is sent to a purification section. In the purification section, the liquid stream is heated until most of the diluent is evaporated. The diluent vapors are then sent to a distillation column to separate residual co-monomer from the diluent. Purified, i.e., wax- and (co-)monomer-free diluent is then sent back to the first reactor. The non-evaporated, heavy bottoms of the evaporation step comprise a liquid stream containing dissolved polyethylene wax and solid polyethylene fines. This liquid stream is further evaporated to produce a waxy residue that is typically sold as a byproduct.

When producing HDPE in the three phase (slurry) reactor system as described above, a known obstacle is the formation of polymer fines. Polymer fines are small solid particles that escape separation in the decanter centrifuge, and cause operational problems in downstream equipment. In particular, fines can accumulate in solvent tanks, and they can foul heat exchangers. This in turn leads to plant downtime or production rate penalties. Moreover, when polymer fines leave the process along with the wax byproduct, the fines may have a negative effect on the byproduct properties. For instance, fine contamination increases the viscosity and the melting point of the wax byproduct, complicating further processing of the wax into value added products.

The polymer particles generated in the reactors of the slurry process have different diameters, and a certain particle size distribution. Polymer fines are generated when the smallest polymer particles in the distribution escape separation in the centrifuge, or when similarly small polymer particles are generated by attrition/fragmentation of bigger polymer particles. The liquid stream may also contain inorganic solids, originating from catalyst or co-catalyst particles. The inorganic solids and the polymeric fines cause similar operational issues; they can both cause fouling in heat exchangers and settling/accumulation in solvent tanks.

### SUMMARY

It is an object of the invention to manage the amount of fines that reach sensitive process equipment in industrial multimodal HDPE production. Fines may be polymeric or inorganic in nature.

The object is achieved in a process of manufacturing multimodal high density polyethylene, comprising performing first polymerization to form a first slurry in a first reactor, transferring at least part of the first slurry from the first reactor into a second reactor, performing second polymerization to form a second slurry in the second reactor. The polymer product, polyethylene is formed in the first and second reactors.

The process further comprises transferring at least part of the slurry from the last reactor to a separating means, separating the slurry into solid polymer product and separated liquids, and separating wax from the separated liquids in an evaporating unit.

The process further comprises filtering polymer fines out of the separated liquids using filtering means before separating wax from the separated liquids.

This allows the polymer product and the separated liquids to acquire a low polymer fines content while preventing the evaporator unit and tanks to become fouled, while leaving the polymerization of HDPE unchanged, and potentially improving wax byproduct properties.

In addition to a clean liquid stream, essentially free of fines, the filter generates a secondary stream containing the fines. The secondary stream may be discharged in a continuous or discontinuous fashion, and it may be discharged as either a dry or a wet cake, depending on the filter design. The cake is a relatively concentrated suspension of solids and diluent. The production of dry cake from the filter typically requires additional processing steps, beyond those required for the production of a wet cake.

In an embodiment, performing the first polymerization in the first reactor to form a first slurry comprises feeding and mixing catalyst, co-catalyst, diluent, ethylene and optionally (co-)monomer and hydrogen, and cooling and recycling the first slurry. This allows the polymerization process to start and form HDPE having a first polymer particle size distribution.

In a further embodiment, performing the second polymerization in the second reactor to form a second slurry comprises feeding and mixing diluent, ethylene and optionally (co-)monomer and hydrogen to the first slurry, and cooling and recycling the second slurry. This allows the further polymerization and formation of HDPE in a second mode, having a modified polymer particle size distribution.

In an embodiment, the process further comprises recycling the separated liquid from the separating means into the first and/or second reactor via first recycle path. This allows unused monomer still dissolved in the recycled liquids to be processed further to form the polymer product.

In an embodiment, the process further comprises transferring at least part of the second slurry from the second reactor to a third reactor, and performing post processing to the second slurry to form a third slurry in the third reactor. The third slurry is transferred to the separating means. The post processing allows a higher ethylene conversion than the two stage polymerization in the first and second polymerization reactors.

In an embodiment, the process further comprises recovering the polymer fines from the filtering means. The polymer fines can be used in various by-products of the polymerization process, such as fabrication of low grade polyethylene products.

In an embodiment, the process further comprises reintroducing the recovered polymer fines into the process. There are several options for the location in the process where the fines are reintroduced.

In one embodiment, reintroducing the recovered polymer fines into the process comprises mixing the recovered polymer fines from the filter means with the wax residue from the evaporating means. This can be performed with minimal or no post processing of the filter cake while the evaporating means is maintained polymer fines free, thus the evaporating means is not obstructed by the fines, while the polymer fines and wax can be discharged from the process for example in a wax purification system which conditions the wax for further use in by-products. Reintroducing the polymer fines as a wet cake reduces costs for further processing. By reintroducing the polymer fines in the wax stream prior to the wax purification system, but after the evaporating unit, no disruption to key unit operations is invoked.

In another embodiment, the recovered polymer fines from the filter means can be fed to the second polymerization reactor. As the polymer fines normally have a low particle size, these particles can be assimilated into the polymerization process and potentially grow further to sizes suitable as polymer product particles,

In an embodiment, the post processing of the recovered polymer fines comprises adding the recovered polymer fines to the polymer product in the product post processing means. Polymer fines similar to the product in everything other than particle size have no effect on the final product quality. Polymer fines that are chemically distinct from the product can still be diluted in prime material without affecting product quality. Therefore, reworking the polymers fines into the final polymer product is a viable and commercially attractive.

There are several options for the location of the filtering unit in the multimodal HDPE process. In one embodiment, the filtering means are located at the liquid outlet of the decanter/centrifuge. In this outlet the largest amount of separated liquids from the main solid/liquid separating unit pass through. Therefore this outlet contains the largest amount of polymer fines, and it requires the largest filter, relative to other options.

In an embodiment, the filtering means are located in the first recycling path of the separated liquids from the main separating means to at least one of the first reactor or the second reactor. This way, polymer fines are removed from the process, however a portion of the fines is allowed to remain in the separated liquids which are passed to the evaporating means. This allows the wax to have a certain polymer fines content, which may be desirable in certain wax by-products.

In an embodiment, the filtering means are located in an inlet of the evaporating means. This way the evaporating means is relieved from the polymer fines, and therefore maintenance effort for the evaporating means can be reduced. The recycle path to the first and/or second polymerization reactor still allow the polymer fines in the separated liquids from the separating means to be recycled in the process.

In an embodiment, the process further comprises drying the separated polymer product from the separating means in a drying means, post processing the polymer product in a product post processing means and recycling effluent from the drying means to the separating means via a second recycling path from the drying means to the separating means. This way a part of the polymer fines that may have passed the separating means and not separated into the separated liquids have another chance of being separated in the separated liquids stream from the separating means.

In an embodiment, the filtering means are arranged in the second recycling path. Thereby polymer fines that were not separated can be removed from the process stream.

In an embodiment, the process further comprises performing post-processing of the recovered polymer fines. This allows the further use of the polymer fines into by-products of the polymerization process.

### BRIEF DESCRIPTION OF THE DRAWINGS

Fig. 1 shows a process diagram of a process for manufacturing multimodal high density polyethylene according to an embodiment of the invention.

### DETAILED DESCRIPTION OF EMBODIMENTS

In fig. 1 a two stage cascade process for the polymerization of ethylene is shown, wherein the first reactor R1201 may be fed continuously with a mixture of monomers, hydrogen, Ziegler-Natta catalyst/co-catalyst in an inlet 101 and diluent (e.g., hexane) recycled from the process in another inlet 102. In the first reactor initial polymerization is performed in a slurry which is transferred in slurry stream 103 in a continuous process to the second reactor R1202. The slurry stream 103 may comprise a flash unit 122 for expelling gas trapped in the slurry. In the second reactor R1202 further polymerization is performed by feeding ethylene monomer and co-monomer in inlet 105 and recycled fluids to the reactor R1201 in inlet 112.

In the first and second reactor R1201, R1202, polymerization of ethylene occurs as an exothermic reaction at pressures in the range between for example from 0.2 MPa (2 bar) to 1 MPa (10 bar), and at temperatures in the range between for example from 75 °C to 88 °C. The heat from the polymerization reaction is removed by means of cooling water. The characteristics of the polyethylene are determined amongst other factors by the catalyst system and by the concentrations of catalyst, co monomer and hydrogen. The monomer conversion of both reactors R1201, R1202 may reach to a value in a range of 95 to 99%.

The slurry from the second reactor R1202 may be transferred via slurry stream 104 to an optional reactor R1204 where post polymerization can be performed, thus allowing higher monomer conversion than that obtained with R1201 and R1202.

The slurry from the second reactor R1202 or from the third reactor R1204, as shown in fig.1, is transferred 106, 107 to a decanter centrifuge S2101 for separation of liquids and solids. The decanter centrifuge S2101 may be provided with a centrifuge buffer D1301 for buffering and mixing with recycled hexane diluent from a later stage, as shown in fig. 1.

In the decanter centrifuge S2101 the polymer product in the form of the polymer particles formed during the polymerization process are separated from the slurry in a wet cake. This wet cake is transferred 108 to a drying unit where the hexane diluent is further separated from the polymer particles. The hexane diluent is condensed in scrubber T2201 from where it can be recycled 120 to the decanter centrifuge buffer D1301. The recycling is done to allow fines in the 120 stream a second pass through S2101, and a second chance at separation from the liquid. The polymer product is discharged 110 from the dryer DR2201 into a powder treatment vessel D2301 where it can be post processed. The post processing may involve processing steps like adding nitrogen, or steam, necessary for obtaining specific end product characteristics.

The liquid separated from the polymer product in the decanter centrifuge S2101, also referred to as mother liquor, can be transferred in a main mother liquor stream 109 to a buffer D2101 for further processing. This (mother liquor) stream 109 contains hexane, 1-butene, co-catalyst residues, small solid particles, and other dissolved species. The small solid particles consists of material with properties equal to the polymer powder, or material with a different molecular weight and co-monomer content that allows this material to precipitate at a given process temperature downstream of the decanters. In addition, the small solid particles may be inorganic catalyst and co-catalyst residues. The decanter centrifuge S2101 typically does not remove all solid material from the liquid (at the liquid discharge point), and not all liquid from the solids stream (at the solids discharge point).

There are several possible locations in the process for the filtering unit 115, 116, 117, 118. The filtering in filter units in the various possible locations in the process can be performed continuously, whereas the extraction of the filtered polymer fines can be performed continuously as well or periodically depending on the filter type. Also the filter units 115, 116, 117, 118 may comprise more than one filter wherein at least one is involved in filtering the liquid stream passing through it, whereas another filter may be temporarily shut off for extracting the recovered polymer fines. The filter unit 115, 116, 117, 118 can have a membrane made from a polymer composition, ceramic or a metal. The membrane can also be made as a cloth, tubular, flat or any other suitable form.

The fines can be filtered in filter unit 115 from the main mother liquor stream 109. This way the fines are extracted before any contamination of downstream equipment can occur. In the main liquor stream 109 the capacity of filter 115 has to be sufficient to filter all of the mother liquor from the decanter centrifuge S2101.

The mother liquor stream 113 after buffer D2101 or at least part thereof may alternatively be recycled to the first reactor R1201 (not shown in fig. 1) or via recycle path 112 to the second reactor R1202 where it can be reintroduced in the polymerization process. In this alternative, a fines filter 117 may be applied in the recycle path 112.

The mother liquor stream 113 or part thereof may also be buffered in mother liquor storage tank FB-2 from where it can be further processed in a distillation process.

The mother liquor stream 113 or part thereof can be transferred to an evaporator unit D3101. The evaporator unit can be a thermosiphon unit which is an evaporator device combined with a heat exchanger, wherein diluent and other volatile parts are evaporated from the mother liquor, which can be expelled or recycled from mother liquor vapor outlet 121 onto the process, and wherein eventually wax is extracted from the mother liquor, which can be pumped out to wax stream 119. The extracted wax can be used for various wax products, such as paints, lubricants, fuel etc. The heat exchanger can receive heat from another part of the process, and allows the mother liquor in the evaporating device to heat up, circulate and thereby induce evaporation.

The vapor from mother liquor vapor outlet 121 can for example be distilled for further purification and diluent hexane extraction and re-used in the polymerization process 100.

The mother liquor stream 113 to the evaporator unit D3101 can be filtered using fines filter 116. By positioning the filter in this path, partly recycling of mother liquor containing fines to the first or second polymerization reactor R1201 and R1202 is still possible via recycle path 112.

The polymer fines, when filtered and recovered from the filter unit 115, 116, 117, 118, can be reintroduced in the process, for example by feeding the fines into the second polymerization reactor R1202, where the polymer fines particles are allowed to grow further and leave the process as polymer product.

The recovered polymer fines can also be added to the polymer product in the powder treatment vessel D2301. The amount of polymer fines can be tuned to the polymer product grade.

Furthermore, the recovered polymer fines can be reintroduced in the process by adding the fines to the product stream 108 to the dryer DR2201, where the polymer fines can mix with the polymer product.

Preferably the recovered polymer fines are added to the outlet wax stream 119 so as to prevent the fines from settling in the evaporating unit D3101. This reduces maintenance costs and prevents down time of the process.

The extent of solubility (and precipitation) of the polymer fines may depend on temperature, the amount of fines recovered by the filter, and the material properties of these fines may depend on the temperature at which the filtration takes place.

The embodiments described are given by way of example only. Deviations and modification to these embodiments may be made without departing from the scope of protection as determined by the claims set out below.

### REFERENCE NUMERALS

- R1201: First polymerization reactor
- R1202: Second polymerization reactor
- R1204: post polymerization reactor
- D1301: decanter buffer
- S2101: decanter centrifuge
- DR2201: dryer
- D2101: mother liquor tank
- D3101: evaporator unit
- D2301: powder treatment vessel
- T2201: recycle buffer
- FB-2: mother liquor storage tank
- 101, 102: first reactor feed
- 103, 104: slurry transfer
- 105: second reactor feed
- 106, 107: polymer product slurry transfer
- 108: wet polymer product
- 109: mother liquor
- 110: polymer product
- 111: post processed polymer product
- 112: recycle path
- 113: mother liquor feed
- 114: diluent exhaust
- 115 - 118: filter
- 119: wax stream
- 120: condensed diluent recycle path
- 121: mother liquor vapor outlet
- 122: flash unit

## Claims

1. Process of manufacturing multimodal high density polyethylene, comprising
• performing first polymerization to form a first slurry in a first reactor (R1201);
• transferring (103) at least part of the first slurry from the first reactor into a second reactor (R1202);
• performing second polymerization to form a second slurry in the second reactor (R1202);
• transferring (104, 106) at least part of the second slurry from the second (R1202) reactor to a separating means (S2101)
• separating the slurry into solid polymer product and separated liquids in the separating means (S2101);
• separating wax from the separated liquids in a evaporating means (D3101); **characterized by**
• filtering the separated liquids for recovering polymer fines using filtering means (115, 116, 117) before separating the wax from the separated liquids in the evaporating means (D3101).

2. Process according to claim 1, wherein performing the first polymerization in the first reactor (R1201) to form a first slurry comprises
• feeding (101, 102) and mixing catalyst, co-catalyst, diluent, ethylene and optionally co-monomer and hydrogen;
• cooling and recycling the first slurry.

3. Process according to claim 1 or claim 2, wherein performing the second polymerization in the second reactor (R1202) to form a second slurry comprises,
• feeding (105) and mixing diluent, ethylene and optionally co-monomer and hydrogen to the first slurry;
• cooling and recycling the second slurry,

4. Process according to any one of the preceding claims, further comprising recycling the separated liquid into the first and/or second reactor (R1201, 1202) via first recycle path (112).

5. Process according to any one of the preceding claims, further comprising
• transferring (104) at least part of the second slurry from the second reactor (R1202) to a third reactor (R1204);
• performing post processing to the second slurry to form a third slurry in the third reactor (R1204), wherein the third slurry is transferred (106) to the separating means (S2101);

6. Process according to any one of the preceding claims, further comprising recovering the polymer fines from the filtering means (115, 116, 117).

7. Process according to claim 6, further comprising reintroducing the recovered polymer fines into the process.

8. Process according to claim 7, wherein the post processing of the recovered polymer fines comprises adding the recovered polymer fines to the polymer product in the product post processing means (D2301).

9. Process according to claim 7, wherein the reintroducing the recovered polymer fines comprises adding the polymer fines to the wax stream (119) downstream of the evaporating means (D3101).

10. Process according to any one of the preceding claims, wherein the filtering means (115) are arranged in an outlet (109) of the separating means (S2101).

11. Process according to any one of the preceding claims, wherein the filtering means (117) are arranged in the first recycling path (112) of the separated liquids from the separating means (S2101) to at least one of the first reactor (R1201) or the second reactor (R1202).

12. Process according to any one of the preceding claims, wherein the filtering means (116) are arranged in an inlet of the evaporating means (D3101).

13. Process according to any one of the preceding claims, further comprising
• drying the separated polymer product from the separating means (S2101) in a drying means (DR2201);
• post processing the polymer product in a product post processing means (D2301);
• recycling effluent to the separating means (S2101) via a second recycling path (120, D1301, 107) from the drying means (DR2201) to the separating means (S2101).

14. Process according to claim 11, wherein the filtering means (118) are arranged in the second recycling path (120).

15. Process according to any one of the preceding claims, further comprising performing post-processing of the recovered polymer fines.

## Patentansprüche

1. Verfahren zur Herstellung von multimodalem Polyethylen hoher Dichte, bei dem man:
• eine erste Polymerisation zur Bildung einer ersten Aufschlämmung in einem ersten Reaktor (R1201) durchführt;
• zumindest einen Teil der ersten Aufschlämmung aus dem ersten Reaktor in einen zweiten Reaktor (R1202) überführt (103) ;
• eine zweite Polymerisation zur Bildung einer zweiten Aufschlämmung in dem zweiten Reaktor (R1202) durchführt;
• zumindest einen Teil der zweiten Aufschlämmung aus dem zweiten Reaktor (R1202) zu einer Trennvorrichtung (S2101) überführt (104, 106);
• die Aufschlämmung in der Trennvorrichtung (S2101) in ein festes Polymerprodukt und abgetrennte Flüssigkeiten trennt;
• Wachs von den abgetrennten Flüssigkeiten in einer Verdampfungsvorrichtung (D3101) trennt;
**dadurch gekennzeichnet, dass**
• man die abgetrennten Flüssigkeiten zum Rückgewinnen von Polymerfeinanteilen unter Verwendung einer Filtrationsvorrichtung (115, 116, 117) vor dem Trennen des Wachses von den abgetrennten Flüssigkeiten in der Verdampfungsvorrichtung (D3101) filtert.

2. Verfahren nach Anspruch 1, bei dem man bei der Durchführung der ersten Polymerisation in dem ersten Reaktor (R1201) zur Bildung einer ersten Aufschlämmung
• Katalysator, Cokatalysator, Verdünnungsmittel, Ethylen und gegebenenfalls Comonomer und Wasserstoff zuführt (101,102) und mischt;
• die erste Aufschlämmung abkühlt und zurückführt.

3. Verfahren nach Anspruch 1 oder Anspruch 2, bei dem man bei der Durchführung der zweiten Polymerisation in dem zweiten Reaktor (R1202) zur Bildung einer zweiten Aufschlämmung
• der ersten Aufschlämmung Verdünnungsmittel, Ethylen und gegebenenfalls Comonomer und Wasserstoff zuführt (105) und mischt;
• die zweite Aufschlämmung abkühlt und zurückführt.

4. Verfahren nach einem der vorhergehenden Ansprüche, bei dem man ferner die abgetrennte Flüssigkeit über den ersten Rückführungsweg (112) in den ersten und/oder zweiten Reaktor (R1201, 1202) zurückführt.

5. Verfahren nach einem der vorhergehenden Ansprüche, bei dem man ferner
• zumindest einen Teil der zweiten Aufschlämmung aus dem zweiten Reaktor (R1202) zu einem dritten Reaktor (R1204) überführt;
• eine Weiterverarbeitung der zweiten Aufschlämmung unter Bildung einer dritten Aufschlämmung in dem dritten Reaktor (R1204) durchführt, wobei man die dritte Aufschlämmung zu der Trennvorrichtung (S2101) überführt (106) .

6. Verfahren nach einem der vorhergehenden Ansprüche, bei dem man ferner die Polymerfeinanteile aus der Filtrationsvorrichtung (115, 116, 117) zurückgewinnt.

7. Verfahren nach Anspruch 6, bei dem man ferner die zurückgewonnenen Polymerfeinanteile erneut dem Verfahren zuführt.

8. Verfahren nach Anspruch 7, bei dem man bei der Weiterverarbeitung der zurückgewonnenen Polymerfeinanteile die zurückgewonnenen Polymerfeinanteile dem Polymerprodukt in der Produktweiterverarbeitungsvorrichtung (D2301) zugibt.

9. Verfahren nach Anspruch 7, bei dem man beim erneuten Einbringen der zurückgewonnenen Polymerfeinanteile die Polymerfeinanteile zu dem der Verdampfungsvorrichtung (D3101) nachgeschalteten Wachsstrom (119) zugibt.

10. Verfahren nach einem der vorhergehenden Ansprüche, bei dem die Filtrationsvorrichtung (115) in einem Auslass (109) der Trennvorrichtung (S2101) angeordnet ist.

11. Verfahren nach einem der vorhergehenden Ansprüche, bei dem die Filtrationsvorrichtung (117) in dem ersten Rückführungsweg (112) der abgetrennten Flüssigkeiten von der Trennvorrichtung (S2101) zu dem ersten Reaktor (R1201) und/oder dem zweiten Reaktor (R1202) angeordnet ist.

12. Verfahren nach einem der vorhergehenden Ansprüche, bei dem die Filtrationsvorrichtung (116) in einem Einlass der Verdampfungsvorrichtung (D3101) angeordnet ist.

13. Verfahren nach einem der vorhergehenden Ansprüche, bei dem man ferner
• das von der Trennvorrichtung (S2101) abgetrennte Polymerprodukt in einer Trocknungsvorrichtung (DR2201) trocknet;
• das Polymerprodukt in einer Produktweiterverarbeitungsvorrichtung (D2301) weiter verarbeitet;
• Ablauf zu der Trennvorrichtung (S2101) über einen zweiten Rückführungsweg (120, D1301, 107) von der Trocknungsvorrichtung (DR2201) zu der Trennvorrichtung (S2101) zurückführt.

14. Verfahren nach Anspruch 11, bei dem die Filtrationsvorrichtung (118) in dem zweiten Rückführungsweg (120) angeordnet ist.

15. Verfahren nach einem der vorhergehenden Ansprüche, bei dem man ferner eine Weiterverarbeitung der zurückgewonnenen Polymerfeinanteile durchführt.

## Revendications

1. Procédé de fabrication de polyéthylène haute densité multimodal, comprenant
• la mise en œuvre d'une première polymérisation pour former une première suspension dans un premier réacteur (R1201) ;
• le transfert (103) d'au moins une partie de la première suspension du premier réacteur dans un deuxième réacteur (R1202) ;
• la mise en œuvre d'une deuxième polymérisation pour former une deuxième suspension dans le deuxième réacteur (R1202) ;
• le transfert (104, 106) d'au moins une partie de la deuxième suspension du deuxième réacteur (R1202) vers un moyen de séparation (S2101)
• la séparation de la suspension en produit polymère solide et des liquides séparés dans le moyen de séparation (S2101) ;
• la séparation de cire des liquides séparés dans un moyen d'évaporation (D3101) ;
**caractérisé par**
• la filtration des liquides séparés pour la récupération de fines de polymère à l'aide de moyens de filtration (115, 116, 117) avant la séparation de la cire des liquides séparés dans le moyen d'évaporation (D3101).

2. Procédé selon la revendication 1, dans lequel la mise en œuvre de la première polymérisation dans le premier réacteur (R1201) pour former une première suspension comprend
• l'introduction (101, 102) et le mélange de catalyseur, de cocatalyseur, de diluant, d'éthylène et éventuellement de comonomère et d'hydrogène ;
• le refroidissement et le recyclage de la première suspension.

3. Procédé selon la revendication 1 ou la revendication 2, dans lequel la mise en œuvre de la deuxième polymérisation dans le deuxième réacteur (R1202) pour former une deuxième suspension comprend
• l'introduction (105) et le mélange de diluant, d'éthylène et éventuellement de comonomère et d'hydrogène dans la première suspension ;
• le refroidissement et le recyclage de la deuxième suspension.

4. Procédé selon l'une quelconque des revendications précédentes, comprenant en outre le recyclage du liquide séparé dans le premier réacteur et/ou le deuxième réacteur (R1201, 1202) par l'intermédiaire d'un premier passage de recyclage (112).

5. Procédé selon l'une quelconque des revendications précédentes, comprenant en outre
• le transfert (104) d'au moins une partie de la deuxième suspension du deuxième réacteur (R1202) vers un troisième réacteur (R1204) ;
• la mise en œuvre d'un post-traitement sur la deuxième suspension pour former une troisième suspension dans le troisième réacteur (R1204), la troisième suspension étant transférée (106) vers le moyen de séparation (S2101) .

6. Procédé selon l'une quelconque des revendications précédentes, comprenant en outre la récupération des fines de polymère à partir des moyens de filtration (115, 116, 117).

7. Procédé selon la revendication 6, comprenant en outre la réintroduction des fines de polymère récupérées dans le procédé.

8. Procédé selon la revendication 7, dans lequel le post-traitement des fines de polymère récupérées comprend l'ajout des fines de polymère récupérées au produit polymère dans le moyen de post-traitement de produit (D2301).

9. Procédé selon la revendication 7, dans lequel la réintroduction des fines de polymère récupérées comprend l'ajout des fines de polymère au flux de cire (119) en aval du moyen d'évaporation (D3101).

10. Procédé selon l'une quelconque des revendications précédentes, dans lequel le moyen de filtration (115) est disposé dans une sortie (109) du moyen de séparation (S2101) .

11. Procédé selon l'une quelconque des revendications précédentes, dans lequel le moyen de filtration (117) est disposé dans le premier passage de recyclage (112) des liquides séparés du moyen de séparation (S2101) vers au moins l'un du premier réacteur (R1201) ou du deuxième réacteur (R1202).

12. Procédé selon l'une quelconque des revendications précédentes, dans lequel le moyen de filtration (116) est disposé dans une entrée du moyen d'évaporation (D3101).

13. Procédé selon l'une quelconque des revendications précédentes, comprenant en outre
• le séchage du produit polymère séparé provenant du moyen de séparation (S2101) dans un moyen de séchage (DR2201) ;
• le post-traitement du produit polymère dans un moyen de post-traitement de produit (D2301) ;
• le recyclage d'effluent vers le moyen de séparation (S2101) par l'intermédiaire d'un second passage de recyclage (120, D1301, 107) du moyen de séchage (DR2201) vers le moyen de séparation (S2101).

14. Procédé selon la revendication 11, dans lequel le moyen de filtration (118) est disposé dans le second passage de recyclage (120).

15. Procédé selon l'une quelconque des revendications précédentes, comprenant en outre la mise en œuvre d'un post-traitement des fines de polymère récupérées.
